# EUROPÄISCHE PATENTSCHRIFT

(11) **EP 3 633 828 B1**
(45) Veröffentlichungstag und Bekanntmachung des Hinweises auf die Patenterteilung: **31.03.2021**
(21) Anmeldenummer: 19193121.1
(22) Anmeldetag: 22.08.2019
(51) Int. Cl.: H02K 5/20, H02K 15/14, H02K 5/08

(54) **MODULARES KÜHLKANALGEHÄUSE UND VERFAHREN ZUM HERSTELLEN EINES MODULAREN KÜHLKANALGEHÄUSES**
MODULAR COOLING CHANNEL HOUSING AND METHOD FOR PRODUCING A MODULAR COOLING CHANNEL HOUSING
BOÎTIER MODULAIRE DE CANAL DE REFROIDISSEMENT ET PROCÉDÉ DE FABRICATION D'UN BOÎTIER MODULAIRE DE CANAL DE REFROIDISSEMENT

(30) Priorität: 02.10.2018 DE 102018216954
(43) Veröffentlichungstag der Anmeldung: 08.04.2020
(73) Patentinhaber: Robert Bosch GmbH, 70442 Stuttgart (DE)
(72) Erfinder: Geise, Stephan, 59602 Ruethen (DE)

(56) Entgegenhaltungen:
- EP-A1- 2 905 881
- WO-A1-2009/038957
- WO-A1-2016/156573
- DE-A1-102015 207 010
- DE-A1-102016 217 361
- US-A1- 2015 048 700

## Beschreibung

Die Erfindung betrifft ein modulares Kühlkanalgehäuse für einen Stator einer elektrischen Maschine. Die Erfindung betrifft des Weiteren ein Verfahren zum Herstellen eines modularen Kühlkanalgehäuses für einen Stator einer elektrischen Maschine.

### Stand der Technik

Für ein elektronisches Antriebssystem, beispielsweise eine eAchse, oder eine artverwandte Baugruppe wird ein Stator in ein Strangpressprofilgehäuse aus Gussmetall integriert, in dessen Mantelfläche meanderförmig angeordnete Kühlkanäle für Kühlmedien eingebracht sind.

Um die Kanäle in das Gussbauteil zu pressen und die Verbindungsflächen passend zu zerspanen, sind viele kosten- und zeitaufwendige Prozessschritte notwendig. Zusätzlich müssen speziell angefertigte Dichtkomponenten separat angefertigt und in einem Montageprozess genau positioniert werden.

Neben der Steigerung der Fehlerquellen und des Energieaufwandes erhöhen die lange Fertigungszeit der Einzelbauteile die Kosten für das gesamte System. Gleichzeitig steigt mit den schweren Metallgussbauteilen das Fahrzeuggewicht und es verringert sich die Reichweite des Elektrofahrzeugs. Die Fertigungsanlagen für das Kühlkanalgehäuse mit dem Strangpressprofil aus Gussmetall sind für genau eine Statorgröße ausgelegt und wenig flexibel bei Maßänderungen. Für ein Gehäuse mit einer abweichenden Länge muss das gesamte Fertigungskonzept neu ausgelegt werden.

Der Aufbau und die Positionierung in einem meanderförmig ausgelegten Kanalsystem im Strangpressprofilgehäuse wird in den Patentschriften DE 10 2015 220 509 A1 und DE 10 2015 218 620 A1 beschrieben.

EP 2 905 881 A1 offenbart ein wassergekühltes Gehäuse einschließlich eines röhrenförmigen Kanals mit Trennwänden. Das Gehäuse umfasst einen zentralen Röhrenkanalabschnitt, einen ersten Abdeckabschnitt und einen zweiten Abdeckabschnitt, die an beiden Enden an den zentralen Röhrenabschnitt gekoppelt sind. Der Röhrenkanalabschnitt ist mit mehreren Trennwänden versehen.

DE 10 2016 217 361 A1 offenbart eine rotatorische Elektromaschine mit einer Außenwandung und einem Kühlmantel. Der Kühlmantel wird von der Außenwandung und einem Außengehäuseteil aus einem Elastomerwerkstoff gebildet. Außenwandung und Außengehäuseteil begrenzen einen Kühlraum. Der Kühlraum ist strukturiert: Es existiert eine Kühlpfadstruktur, welche durch ein Strukturelement des Außengehäuseteils gebildet wird. Der Kühlraum ist strukturiert, indem die Formgebung des Außengehäuseteils eine Mehrzahl von Strukturelementen der Kühlpfadstruktur, von sich in axialer Richtung erstreckenden Wänden aufweist. Die Wände berühren die Außenwandung und sind an den Berührflächen mit der Außenwandung fluiddicht verbunden, hier aufvulkanisiert.

WO 2009/038957 A1 offenbart einen Kühlmantel für einen Elektromotor. Der Kühlmantel umfasst einen Mantelabschnitt und zwei Enddeckel, die an dem Mantelabschnitt befestigt sind. Der Mantelabschnitt umfasst eine äußere periphere Wandung und eine innere periphere Wandung, die einen Kühlraum zwischen sich ausbilden. Verbindungswände verbinden die innere und äußere periphere Wandung und bilden eine Vielzahl an diskreten Kühlkanälen aus.

WO 2016/156573 A1 offenbart ein Statorgehäuse und zwei Enddeckel, die an den beiden Seitenenden des Statorgehäuses angeordnet sind, und einen Kühlströmungskanal für den Stator, welcher in dem Statorgehäuse angeordnet ist.

### Offenbarung der Erfindung

Die vorliegende Erfindung schafft ein modulares Kühlkanalgehäuse für einen Stator einer elektrischen Maschine. Das modulare Kühlkanalgehäuse weist einen Metallzylinder, ein erstes Verbindungsmodul, ein zweites Verbindungsmodul und ein zwischen dem ersten Verbindungsmodul und dem zweiten Verbindungsmodul angeordnetes Mittelmodul auf.

Das Mittelmodul ist mit dem ersten Verbindungsmodul und dem zweiten Verbindungsmodul dichtend verbunden, wobei jedes der Module auf einer Außenoberfläche des Metallzylinders angeordnet und zu dem Metallzylinder konzentrisch ausgebildet ist, wobei ein zwischen der Außenoberfläche des Metallzylinders und einer Innenoberfläche einer Wandung der Module ausgebildetes Volumen mit einem Kühlmittel befüllbar ist, wobei die Module eine Mehrzahl von an der Innenoberfläche der Wandung ausgebildeten Stegelementen aufweisen, wobei die Stegelemente jeweils einen ersten Spreizabschnitt und einen zweiten Spreizabschnitt aufweisen, welche an der Außenoberfläche des Metallzylinders dichtend anliegen, wobei die Stegelemente dazu ausgebildet sind, be einer durch eine Temperaturänderung des Kühlmittels bewirkten Volumenänderung des Kühlmittels einen radialen Abstand der Wandung der Module von der Außenoberfläche des Metallzylinders bei kontinuierlich dichtender Anlage der Stegelemente an der Außenoberfläche des Metallzylinders durch eine Veränderung der Spreizung der Spreizabschnitte der jeweiligen Stegelemente an das geänderte Kühlmittelvolumen anzupassen.

Die vorliegende Erfindung schafft des Weiteren ein Verfahren zum Herstellen eines modularen Kühlkanalgehäuses für einen Stator einer elektrischen Maschine. Das Verfahren umfasst ein Bereitstellen eines Metallzylinders. Das Verfahren umfasst des Weiteren ein Spritzgießen eines ersten Verbindungsmoduls und eines zweiten Verbindungsmoduls in einem Spritzgießwerkzeug einer ersten Spritzgießmaschine. Das Verfahren umfasst ferner ein Spritzgießen eines Mittelmoduls in einem Spritzgießwerkzeug einer zweiten Spritzgießmaschine, wobei die Module mit einer Mehrzahl von an einer Innenoberfläche einer Wandung der Module angeordneten Stegelementen ausgebildet werden. Das Verfahren umfasst darüber hinaus ein Anordnen der Module auf einer Außenoberfläche des Metallzylinders und konzentrisch zu dem Metallzylinder, wobei das Mittelmodul zwischen dem ersten Verbindungsmodul und dem zweiten Verbindungsmodul angeordnet wird, wobei das Mittelmodul mit dem ersten Verbindungsmodul und dem zweiten Verbindungsmodul dichtend verbunden wird, wobei ein zwischen der Außenoberfläche des Metallzylinders und einer Innenoberfläche der Wandung der Module ausgebildetes Volumen mit einem Kühlmittel befüllbar ist, wobei die Stegelemente jeweils einen ersten Spreizabschnitt und einen zweiten Spreizabschnitt aufweisen, welche an der Außenoberflächen des Metallzylinders dichtend anliegen, wobei die Stegelemente bei einer durch eine Temperaturänderung des Kühlmittels bewirkten Volumenänderung des Kühlmittels einen radialen Abstand der Wandung der Module von der Außenoberfläche des Metallzylinders bei kontinuierlich dichtender Anlage der Stegelemente an der Außenoberfläche des Metallzylinders durch eine Veränderung der Spreizung der Spreizabschnitte der jeweiligen Stegelemente an das geänderte Kühlmittelvolumen anpassen.

Eine Idee der vorliegenden Erfindung ist es, mit dem modularen Aufbau des Kühlkanalgehäuses ein kostengünstiges und gewichtssparendes Kühlkanalgehäuse für den Stator der elektrischen Maschine in kurzer Fertigungszeit herstellen zu können. Das Gehäuse kann somit in vorteilhafter effizient Wärme abführen und kann durch geringfügige Anpassungen im Fertigungskonzept in der Länge variiert werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass ein jeweiliges Stegelement einen an der Innenoberfläche der Wandung der Module angeordneten Basisabschnitt und einen sich an den Basisabschnitt axial anschließenden ersten Spreizabschnitt und zweiten Spreizabschnitt aufweist, wobei der erste Spreizabschnitt und der zweite Spreizabschnitt an der Außenoberfläche des Metallzylinders dichtend anliegen und in einem vorgegebenen Winkel zum Basisabschnitt angestellt sind. Durch Vorsehen des jeweiligen Stegelements mit dem Basisabschnitt und den beiden Spreizabschnitten kann in vorteilhafter Weise eine Spreizbarkeit des jeweiligen Stegelements im Betrieb des Kühlkanalgehäuses ermöglicht werden.

Gemäß einer weiteren bevorzugten Weiterbildung ist vorgesehen, dass der erste Spreizabschnitt und der zweite Spreizabschnitt zu dem Basisabschnitt derart spreizbar sind, dass bei der durch die Temperaturänderung des Kühlmittels bewirkten Volumenänderung des Kühlmittels der radiale Abstand der Wandung der Module von der Außenoberfläche des Metallzylinders durch die Änderung des Winkels der Spreizabschnitte zum Basisabschnitt bei kontinuierlich dichtender Anlage der Stegelemente an der Außenoberfläche des Metallzylinders änderbar ist. Die Stegelemente weisen somit in vorteilhafter Weise die Funktionalität auf, ein zwischen der Wandung der Module und der Außenoberfläche des Metallzylinders ausgebildetes Volumen in einem vorgegebenen Bereich anpassen zu können, wobei die Stegelemente zudem kontinuierlich dichtend an der Außenoberfläche des Metallzylinders anliegen.

Gemäß einer weiteren bevorzugten Weiterbildung ist vorgesehen, dass die Module aus zumindest einem Kunststoff der Gruppe bestehend aus Polyamid, Acrylnitril-Butadien-Styrol-Copolymer oder Polypropylen ausgebildet sind. Hierdurch weist das jeweilige Modul des Kühlkanalgehäuses die erforderliche Flexibilität zur Durchführung der Funktion des Volumenausgleichs als auch der Spreizbarkeit der Stegelemente auf.

Gemäß einer weiteren bevorzugten Weiterbildung ist vorgesehen, dass das erste Verbindungsmodul an einem zu dem Mittelmodul benachbart angeordneten axialen Endabschnitt zumindest einen Gewindeeinsatz aufweist, wobei das Mittelmodul an einem zu dem ersten Verbindungsmodul benachbart angeordneten axialen Endabschnitt zumindest eine zu dem zumindest einen Gewindeeinsatz des ersten Verbindungsmoduls deckungsgleiche Anschraubbuchse aufweist, durch welche eine Schraube zum Befestigen des Mittelmoduls an dem ersten Verbindungsmodul eingefügt ist. Somit kann das erste Verbindungsmodul an dem Mittelmodul in zuverlässiger Weise befestigt werden.

Gemäß einer weiteren bevorzugten Weiterbildung ist vorgesehen, dass das zweite Verbindungsmodul an einem zu dem Mittelmodul benachbart angeordneten axialen Endabschnitt zumindest einen Gewindeeinsatz aufweist, wobei das Mittelmodul an einem zu dem zweiten Verbindungsmodul benachbart angeordneten axialen Endabschnitt zumindest eine zu dem zumindest einen Gewindeeinsatz des zweiten Verbindungsmoduls deckungsgleiche Anschraubbuchse aufweist, durch welche eine Schraube zum Befestigen des Mittelmoduls an dem zweiten Verbindungsmodul eingefügt ist. Somit kann eine einfache und sichere Befestigbarkeit des zweiten Verbindungsmoduls an dem Mittelmodul ermöglicht werden.

Gemäß einer weiteren bevorzugten Weiterbildung ist vorgesehen, dass das Mittelmodul an einer Verbindungsfläche zu dem ersten Verbindungsmodul ein mit einer Mehrzahl von Hinterschnitten ausgebildetes erstes Dichtelement aufweist, welches von der Wandung des Mittelmoduls derart umspritzt ist, dass dieses an der Wandung des Mittelmoduls positionsfest angeordnet ist, und wobei das Mittelmodul an einer Verbindungsfläche zu dem zweiten Verbindungsmodul ein mit einer Mehrzahl von Hinterschnitten ausgebildetes zweites Dichtelement aufweist, welches von der Wandung des Mittelmoduls derart umspritzt ist, dass dieses an der Wandung des Mittelmoduls positionsfest angeordnet ist. Somit kann in vorteilhafter Weise eine dichtende Verbindung zwischen dem ersten Verbindungsmodul und dem Mittelmodul sowohl zwischen dem zweiten Verbindungsmodul und dem Mittelmodul bereitgestellt werden.

Gemäß einer weiteren bevorzugten Weiterbildung ist vorgesehen, dass die Wandung des Mittelmoduls, die Wandung des ersten Verbindungsmoduls und des zweiten Verbindungsmoduls in Axialrichtung zumindest abschnittsweise überlappt, wobei die Wandung des Mittelmoduls radial außerhalb der Wandungen des ersten Verbindungsmoduls und des zweiten Verbindungsmoduls angeordnet ist. Aufgrund der überlappenden Anordnung der Wandung des Mittelmoduls in Verbindung mit dem Vorsehen der Dichtelemente im Bereich des Mittelmoduls kann somit eine gute Abdichtung gegenüber dem ersten Verbindungsmodul und dem zweiten Verbindungsmodul ermöglicht werden.

Gemäß einer weiteren bevorzugten Weiterbildung ist vorgesehen, dass das erste Verbindungsmodul an einem zu dem Mittelmodul entgegengesetzt angeordneten weiteren axialen Endabschnitt ein mit einer Mehrzahl von Hinterschnitten ausgebildetes drittes Dichtelement aufweist, welches von der Wandung des ersten Verbindungsmoduls und einem an einer Innenoberfläche des Metallzylinders angeordneten Zylinderaufsatz derart umspritzt ist, dass dieses positionsfest angeordnet ist. Somit kann der weitere axiale Endabschnitt des ersten Verbindungsmoduls durch das Dichtelement sicher abgedichtet werden.

Gemäß einer weiteren bevorzugten Weiterbildung ist vorgesehen, dass das zweite Verbindungsmodul an einem zu dem Mittelmodul entgegengesetzt angeordneten weiteren axialen Endabschnitt ein mit einer Mehrzahl von Hinterschnitten ausgebildetes viertes Dichtelement aufweist, welches von der Wandung des zweiten Verbindungsmoduls und einem an einer Innenoberfläche des Metallzylinders angeordneten Zylinderaufsatz derart umspritzt ist, dass dieses positionsfest angeordnet ist. Somit kann eine sichere und zuverlässige Abdichtung des zweiten Verbindungsmoduls im Bereich des weiteren axialen Endabschnitts ermöglicht werden.

Gemäß einer weiteren bevorzugten Weiterbildung ist vorgesehen, dass ein mit einer Mehrzahl von Hinterschnitten ausgebildetes erstes Dichtelement und drittes Dichtelement in eine geöffnete Kavität des Spritzgießwerkzeugs der ersten Spritzgießmaschine mit einem Handling auf Haltestifte gesetzt und durch in dem Spritzgießwerkzeug ausgebildeten Vakuumöffnungen fixiert werden, wobei zumindest ein Gewindeeinsatz mit dem Handling auf weitere Haltestifte in der geöffneten Kavität des Spritzgießwerkzeugs der ersten Spritzgießmaschine gesetzt wird, und wobei das erste Verbindungsmodul oder das zweite Verbindungsmodul durch Umspritzen des erstes Dichtelements, des dritten Dichtelements und des zumindest einen Gewindeeinsatzes ausgeformt wird.

Somit können in vorteilhafter Weise das erste Verbindungselement und das zweite Verbindungselement mit den hierin integral ausgebildeten Dichtungen und Gewindeeinsätzen in der ersten Spritzgießmaschine ausgebildet werden.

Gemäß einer weiteren bevorzugten Weiterbildung ist vorgesehen, dass ein mit einer Mehrzahl von Hinterschnitten ausgebildetes zweites Dichtelement und viertes Dichtelement in eine geöffnete Kavität des Spritzgießwerkzeugs der zweiten Spritzgießmaschine mit einem Handling auf Haltestifte gesetzt und durch in dem Spritzgießwerkzeug ausgebildeten Vakuumöffnungen fixiert werden, wobei zumindest eine Anschraubbuchse mit dem Handling auf weitere Haltestifte in der geöffneten Kavität des Spritzgießwerkzeugs der zweiten Spritzgießmaschine gesetzt wird, und wobei das Mittelmodul durch Umspritzen des zweiten Dichtelements, des vierten Dichtelements und der zumindest einen Anschraubbuchse ausgeformt wird.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Längsschnittansicht eines modularen Kühlkanalgehäuses für einen Stator einer elektrischen Maschine gemäß einer bevorzugten Ausführungsform der Erfindung;
- Fig. 2: eine Längsschnittansicht eines modularen Kühlkanalgehäuses mit verkürztem Mittelmodul für einen Stator einer elektrischen Maschine gemäß einer weiteren bevorzugten Ausführungsform der Erfindung;
- Fig. 3: eine Seitenansicht einer Stirnseite des modularen Kühlkanalgehäuses für einen Stator einer elektrischen Maschine gemäß der bevorzugten Ausführungsform der Erfindung;
- Fig. 4: eine vergrößerte Detailansicht einer Wandung eines ersten Verbindungsmoduls des modularen Kühlkanalgehäuses für einen Stator einer elektrischen Maschine gemäß der bevorzugten Ausführungsform der Erfindung;
- Fig. 5: eine vergrößerte Detailansicht einer Wandung eines ersten Verbindungsmoduls des modularen Kühlkanalgehäuses für einen Stator einer elektrischen Maschine gemäß der bevorzugten Ausführungsform der Erfindung;
- Fig. 6: eine schematische Darstellung einer ersten Spritzgießmaschine zum Ausbilden des ersten Verbindungsmoduls und des zweiten Verbindungsmoduls des modularen Kühlkanalgehäuses für einen Stator einer elektrischen Maschine gemäß der bevorzugten Ausführungsform der Erfindung;
- Fig. 7: eine schematische Darstellung einer zweiten Spritzgießmaschine zum Ausbilden des Mittelmoduls des modularen Kühlkanalgehäuses für einen Stator einer elektrischen Maschine gemäß der bevorzugten Ausführungsform der Erfindung;
- Fig. 8: eine schematische Darstellung der zweiten Spritzgießmaschine mit geänderten Werkzeugeinsätzen zum Ausbilden eines modifizierten Mittelmoduls des modularen Kühlkanalgehäuses für einen Stator einer elektrischen Maschine gemäß der bevorzugten Ausführungsform der Erfindung; und
- Fig. 9: ein Ablaufdiagramm eines Verfahrens zum Herstellen des modularen Kühlkanalgehäuses für einen Stator einer elektrischen Maschine gemäß der bevorzugten Ausführungsform der Erfindung.

### Ausführliche Beschreibung der Erfindung

In den Figuren der Zeichnungen bezeichnen gleiche Bezugszeichen gleiche oder funktionsgleiche Elemente, Bauteile oder Komponenten, soweit nichts Gegenteiliges angegeben ist.

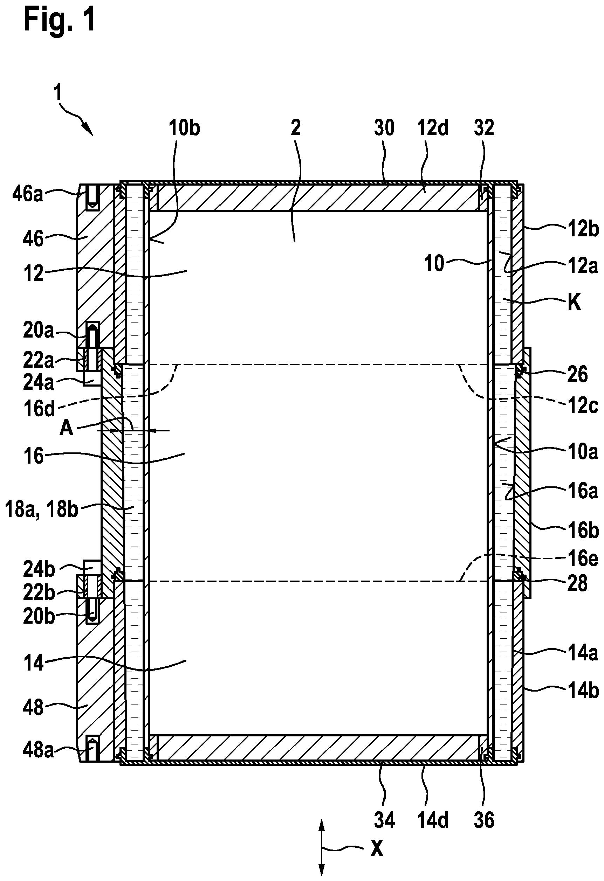

Fig. 1 zeigt eine Längsschnittansicht eines modularen Kühlkanalgehäuses für einen Stator einer elektrischen Maschine gemäß einer bevorzugten Ausführungsform der Erfindung.

Das modulare Kühlkanalgehäuse 1 für den Stator 2 der elektrischen Maschine weist einen auf eine vorgegebene Länge abgelängten Metallzylinder 10 auf. Ferner weist das modulare Kühlkanalgehäuse 1 ein erstes Verbindungsmodul 12, ein zweites Verbindungsmodul 14 und ein zwischen dem ersten Verbindungsmodul 12 und dem zweiten Verbindungsmodul 14 angeordnetes Mittelmodul 16 auf.

Das Mittelmodul 16 ist mit dem ersten Verbindungsmodul 12 und dem zweiten Verbindungsmodul 14 dichtend verbunden. Jedes der Module 12, 14, 16 ist auf einer Außenoberfläche 10a des Metallzylinders 10 angeordnet und zu dem Metallzylinder 10 konzentrisch ausgebildet.

Ein zwischen der Außenoberfläche 10a des Metallzylinders 10 und einer Innenoberfläche 12a, 14a, 16a einer Wandung 12b, 14b, 16b der Module 12, 14, 16 ausgebildetes Volumen ist mit einem Kühlmittel K befüllbar. Die Module 12, 14, 16 weisen eine Mehrzahl von an der Innenoberfläche 12a, 14a, 16a der Wandung 12b, 14b, 16b ausgebildeten Stegelementen 18a, 18b auf. Die Stegelemente 18a, 18b sind dazu ausgebildet, bei einer durch eine Temperaturänderung des Kühlmittels K bewirkten Volumenänderung des Kühlmittels K einen radialen Abstand A der Wandung 12b, 14b, 16b der Module 12, 14, 16 von der Außenoberfläche 10a des Metallzylinders 10 bei kontinuierlich dichtender Anlage der Stegelemente 18a, 18b an der Außenoberfläche 10a des Metallzylinders 10 an das geänderte Kühlmittelvolumen anzupassen.

Die Module 12, 14, 16 sind aus zumindest einem Kunststoff der Gruppe bestehend aus Polyamid, Acrylnitril-Butadien-Styrol-Copolymer oder Polypropylen ausgebildet. Die Module 12, 14, 16 können somit aus einem der vorstehend genannten Stoffe oder einer Mischung hieraus ausgebildet sein.

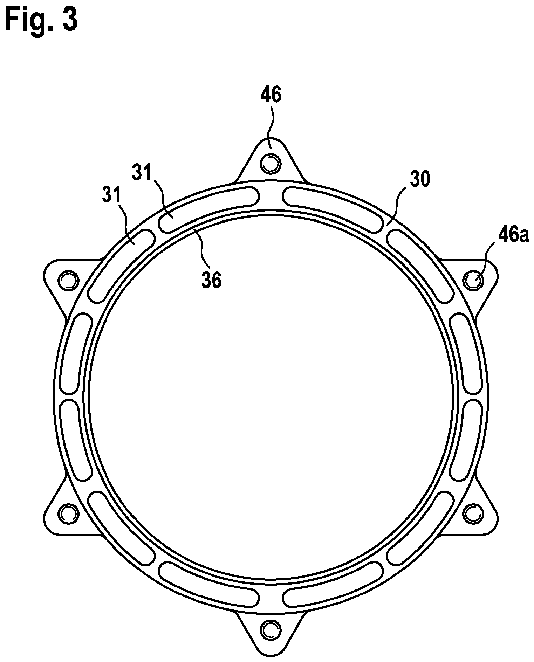

Das erste Verbindungsmodul 12 weist an einem zu dem Mittelmodul 16 benachbart angeordneten axialen Endabschnitt 12c zumindest einen Gewindeeinsatz 20a auf. Das Mittelmodul 16 weist an einem zu dem ersten Verbindungsmodul 12 benachbart angeordneten axialen Endabschnitt 16c zumindest eine zu dem zumindest einen Gewindeeinsatz 20a des ersten Verbindungsmoduls 12 deckungsgleiche Anschraubbuchse 22a auf. Durch die Anschraubbuchse 22a ist eine Schraube 24a zum Befestigen des Mittelmoduls an dem ersten Verbindungsmodul 12 eingefügt. In der Längsschnittansicht der Fig. 1 sind im Bereich des Mittelmoduls nur zwei Anschraubbuchsen und Schrauben dargestellt, wie beispielsweise in Fig. 3 dargestellt, sind jedoch eine Mehrzahl von Anschraubbuchsen um den Umfang des modularen Kühlkanalgehäuses herum verteilt.

Das zweite Verbindungsmodul 14 weist an einem zu dem Mittelmodul 16 benachbart angeordneten axialen Endabschnitt 14c zumindest einen Gewindeeinsatz 20b auf. Das Mittelmodul 16 weist an einem zu dem zweiten Verbindungsmodul 14 benachbart angeordneten axialen Endabschnitt 14d zumindest eine zu dem zumindest einen Gewindeeinsatz 20b des zweiten Verbindungsmoduls 14 deckungsgleiche Anschraubbuchse 22b auf. Durch die Anschraubbuchse 22b ist eine Schraube 24b zum Befestigen des Mittelmoduls 16 an dem zweiten Verbindungsmodul 14 eingefügt.

Das Mittelmodul 16 weist an einer Verbindungsfläche 16d zu dem ersten Verbindungsmodul ein mit einer Mehrzahl von Hinterschnitten ausgebildetes erstes Dichtelement 26 auf. Das erste Dichtelement 26 ist von der Wandung 16b des Mittelmoduls 16 derart umspritzt, dass dieses an der Wandung 16b des Mittelmoduls 16 positionsfest angeordnet ist.

Das Mittelmodul 16 weist an einer Verbindungsfläche 16e zu dem zweiten Verbindungsmodul 14 ein mit einer Mehrzahl von Hinterschnitten ausgebildetes zweites Dichtelement 28 auf. Das zweite Dichtelement 28 ist von der Wandung 16b des Mittelmoduls 16 derart umspritzt, dass dieses an der Wandung 16b des Mittelmoduls 16 positionsfest angeordnet ist.

Die Wandung 16b des Mittelmoduls 16 überlappt die Wandung 12b, 14b des ersten Verbindungsmoduls 12 und des zweiten Verbindungsmoduls 14 in Axialrichtung X zumindest abschnittsweise. Die Wandung 16b des Mittelmoduls 16 ist des Weiteren radial außerhalb der Wandungen 12b, 14b des ersten Verbindungsmoduls und des zweiten Verbindungsmoduls 14 angeordnet.

Das erste Verbindungsmodul 12 weist an einem zu dem Mittelmodul 16 entgegengesetzt angeordneten weiteren axialen Endabschnitt 12d ein mit einer Mehrzahl von Hinterschnitten ausgebildetes drittes Dichtelement 30 auf. Das dritte Dichtelement 30 ist von der Wandung 12b des ersten Verbindungsmoduls 12 und einem an einer Innenoberfläche 10b des Metallzylinders 10 angeordneten Zylinderaufsatz 32 derart umspritzt, dass dieses positionsfest angeordnet ist.

Das zweite Verbindungsmodul 14 weist an einem zu dem Mittelmodul 16 entgegengesetzt angeordneten weiteren axialen Endabschnitt 14d ein mit einer Mehrzahl von Hinterschnitten ausgebildetes viertes Dichtelement 34 auf. Das vierte Dichtelement 34 ist von der Wandung 14b des zweiten Verbindungsmoduls 14 und einem an einer Innenoberfläche 10b des Metallzylinders 10 angeordneten Zylinderaufsatz 36 derart umspritzt, dass dieses positionsfest angeordnet ist.

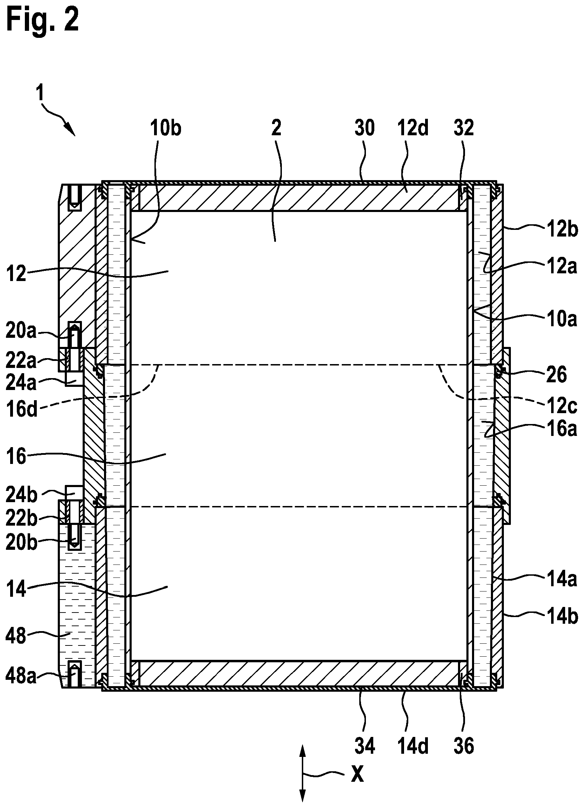

Fig. 2 zeigt eine Längsschnittansicht eines modularen Kühlkanalgehäuses mit verkürztem Mittelmodul für einen Stator einer elektrischen Maschine gemäß einer weiteren bevorzugten Ausführungsform der Erfindung.

Im Gegensatz zu der in Fig. 1 gezeigten Ausführungsform des modularen Kühlkanalgehäuses ist in der in Fig. 2 dargestellten Ausführungsform das Mittelmodul 16 derart ausgebildet, dass dieses gegenüber dem in Fig. 1 dargestellten Mittelmodul 16 eine geringere axiale Länge aufweist. Sämtliche der anderen Komponenten des Mittelmoduls 16 sowie des ersten Verbindungsmoduls 12 und des zweiten Verbindungsmoduls 14 sind zu der in Fig. 1 dargestellten Ausführungsform identisch. Je nach axialer Abmessung des Stators kann somit ein exakt auf die Länge des Stators angepasstes modulares Kühlkanalgehäuse hergestellt werden, da eine axiale Länge des Mittelmoduls 16 entsprechend der jeweiligen Anforderungen an eine Gesamtbaulänge des modularen Kühlkanalgehäuses anpassbar ist.

Fig. 3 zeigt eine Seitenansicht einer Stirnseite des modularen Kühlkanalgehäuses für einen Stator einer elektrischen Maschine gemäß der bevorzugten Ausführungsform der Erfindung.

Der Zylinderaufsatz 36 ist radial innerhalb des dritten Dichtelements 30 angeordnet. Das dritte Dichtelement 30 weist eine Mehrzahl von Öffnungen 31 auf, durch welche das Kühlmittel K fließen kann.

In jeweiligen an das zweite Verbindungsmodul 14 angeformten bzw. mit diesem integral ausgebildeten Verbindungsrippen sind entsprechende Gewindeeinsätze 46 eingefügt, die als Anschraubpunkte für eine Verschraubung des modularen Kühlkanalgehäuses an einer bestimmten Position, z.B. im Kraftfahrzeug, dienen.

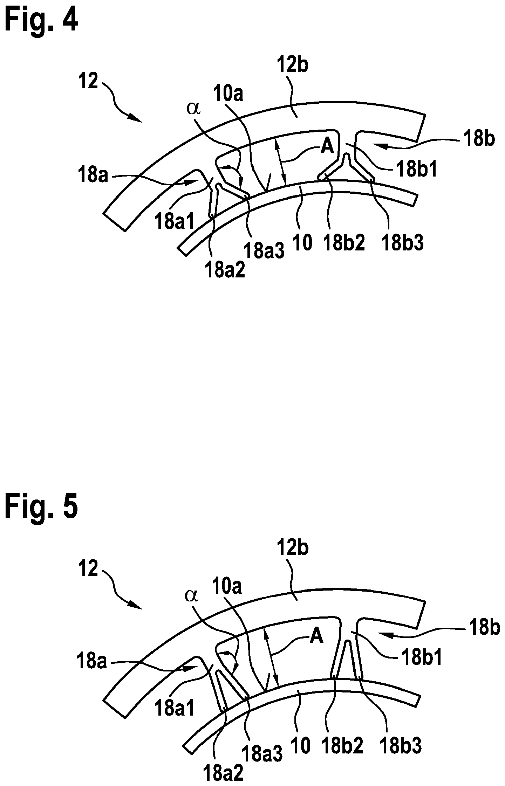

Fig. 4 zeigt eine vergrößerte Detailansicht einer Wandung eines ersten Verbindungsmoduls des modularen Kühlkanalgehäuses für einen Stator einer elektrischen Maschine gemäß der bevorzugten Ausführungsform der Erfindung.

Ein jeweiliges Stegelement 18a, 18b weist einen an der Innenoberfläche der Wandung 12b des Moduls 12 angeordneten Basisabschnitt 18a1, 18b1 und einen sich an den Basisabschnitt 18a1, 18b1 axial anschließenden ersten Spreizabschnitt 18a2, 18b2 und zweiten Spreizabschnitt 18a3, 18b3 auf. Der erste Spreizabschnitt 18a2, 18b2 und der zweite Spreizabschnitt 18a3, 18b3 sind an der Außenoberfläche 10a des Metallzylinders 10 dichtend angelegt und in einem vorgegebenen Winkel α zum Basisabschnitt 18a1, 18b1 angestellt.

Der erste Spreizabschnitt 18a2, 18b2 und der zweite Spreizabschnitt 18a3, 18b3 sind zum Basisabschnitt 18a1, 18b1 derart spreizbar, dass bei der durch die Temperaturänderung des Kühlmittels K bewirkten Volumenänderung des Kühlmittels K der radiale Abstand A der Wandung 12b des Moduls 12 von der Außenoberfläche 10a des Metallzylinders 10 durch Änderung des Winkels α der Spreizabschnitte 18a2, 18a3, 18b2, 18b3 zum Basisabschnitt 18a1, 18b1 bei kontinuierlich dichtender Anlage der Stegabschnitte 18a, 18b an der Außenoberfläche 10a des Metallzylinders 10 änderbar ist.

In der in Fig. 4 gezeigten Ansicht ist das erste Verbindungsmodul 12 sowie die Stegelemente 18a, 18b mit einem großen Spreizungswinkel α dargestellt. Der Abstand A zwischen der Wandung 12b des Moduls 12 und der Außenoberfläche 10a des Metallzylinders 10 ist somit relativ gering.

Fig. 5 zeigt eine vergrößerte Detailansicht einer Wandung eines ersten Verbindungsmoduls des modularen Kühlkanalgehäuses für einen Stator einer elektrischen Maschine gemäß der bevorzugten Ausführungsform der Erfindung.

In der in Fig. 5 gezeigten Darstellung ist der Abstand A in Radialrichtung des ersten Verbindungsmoduls 12 zwischen der Wandung 12b des Moduls 12 und der Außenoberfläche 10a des Metallzylinders 10 durch eine Expansion des Volumens des Kühlmittels K relativ groß. Die Dichtelemente 18a, 18b liegen dennoch dichtend an der Außenoberfläche 10a des Metallzylinders 10 an, da diese dazu ausgebildet sind, bei einer Volumenerhöhung des Kühlmittels ihre Spreizung zu verringern und dennoch kontinuierlich dichtend an der Außenoberfläche 10a des Metallzylinders 10 anzuliegen.

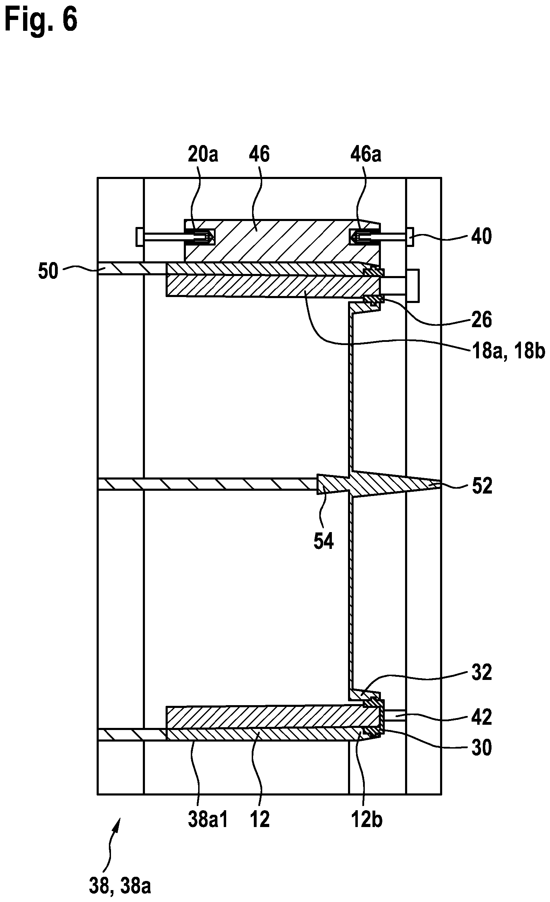

Fig. 6 zeigt eine schematische Darstellung einer ersten Spritzgießmaschine zum Ausbilden des ersten Verbindungsmoduls und des zweiten Verbindungsmoduls des modularen Kühlkanalgehäuses für einen Stator einer elektrischen Maschine gemäß der bevorzugten Ausführungsform der Erfindung.

Ein mit einer Mehrzahl von Hinterschnitten ausgebildetes ersten Dichtelement 26 und drittes Dichtelement 30 sind in eine geöffnete Kavität 38a1 des Spritzgießwerkzeugs 38a der ersten Spritzgießmaschine 38 mit einem (in Fig. 6 nicht gezeigten) Handling auf Haltestifte 40 gesetzt.

Ferner werden diese durch in dem Spritzgießwerkzeug 38a ausgebildete Vakuumöffnungen 42 fixiert.

Ein erster Gewindeeinsatz 20a und ein zweiter Gewindeeinsatz 46a werden mit dem Handling auf weitere Haltestifte in der geöffneten Kavität 38a1 des Spritzgießwerkzeugs 38a der ersten Spritzgießmaschine 38 gesetzt. Anschließend wird durch Einspritzen eines Kunststoffs das Verbindungsmodul ausgeformt. Das erste Verbindungsmodul und das zweite Verbindungsmodul weisen hierbei einen identischen Aufbau auf.

Das Spritzgießwerkzeug 38a weist überdies einen Anguss 52 und eine benachbart angeordnete Rückhaltung 54 auf.

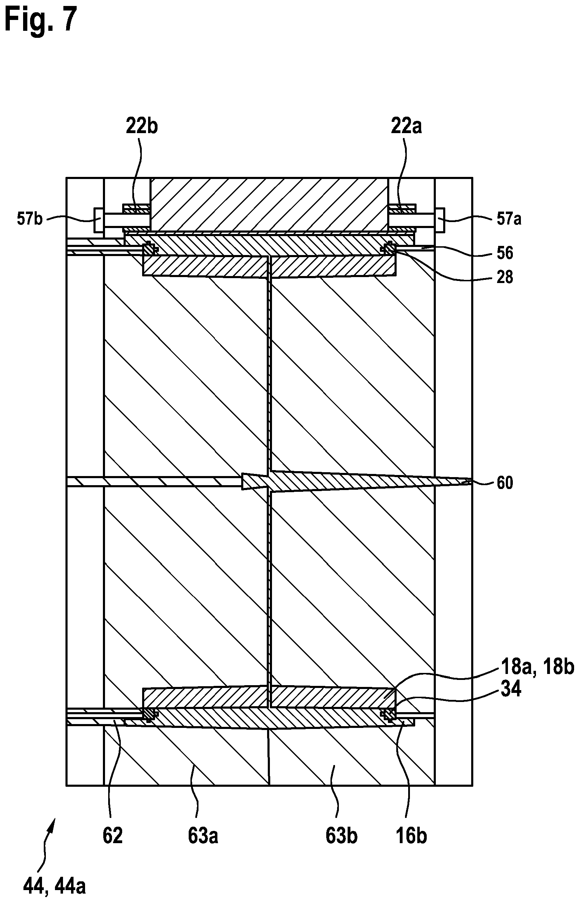

Fig. 7 zeigt eine schematische Darstellung einer zweiten Spritzgießmaschine zum Ausbilden des Mittelmoduls des modularen Kühlkanalgehäuses für einen Stator einer elektrischen Maschine gemäß der bevorzugten Ausführungsform der Erfindung.

Ein mit einer Mehrzahl von Hinterschnitten ausgebildetes zweites Dichtelement 28 und ein mit einer Mehrzahl von Hinterschnitten ausgebildetes viertes Dichtelement 34 sind in eine geöffnete Kavität 44a1 des Spritzgießwerkzeugs 44a der zweiten Spritzgießmaschine 44 mit einem (in Fig. 7 nicht gezeigten) Handling auf Haltestifte 57a, 57b gesetzt.

Diese werden durch in dem Spritzgießwerkzeug 44a ausgebildeten Vakuumöffnungen 56 fixiert. Eine erste Anschraubbuchse 22a und eine zweite Anschraubbuchse 22b werden mit dem Handling auf weitere Haltestifte in der geöffneten Kavität 44a1 des Spritzgießwerkzeugs 44a der zweiten Spritzgießmaschine 44 gesetzt. Das Mittelmodul 16 wird anschließend durch Umspritzen des zweiten Dichtungselements, des vierten Dichtungselements und den Anschraubbuchsen 22a, 22b ausgeformt.

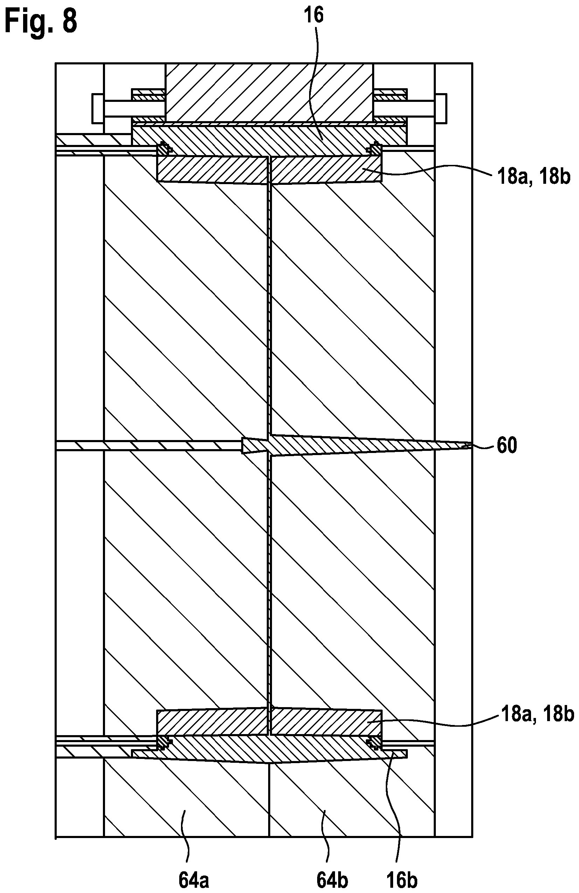

Fig. 8 zeigt eine schematische Darstellung der zweiten Spritzgießmaschine mit geänderten Werkzeugeinsätzen 64a, 64b zum Ausbilden eines modifizierten Mittelmoduls des modularen Kühlkanalgehäuses für einen Stator einer elektrischen Maschine gemäß der bevorzugten Ausführungsform der Erfindung.

Das modifizierte Mittelmodul des modularen Kühlkanalgehäuses weist im vorliegenden Ausführungsbeispiel eine verringerte axiale Länge auf. Prinzipiell kann eine axiale Abmessung nach entsprechenden Erfordernissen gewählt werden und mit diesbezüglich angepassten Werkzeugeinsätzen hergestellt werden.

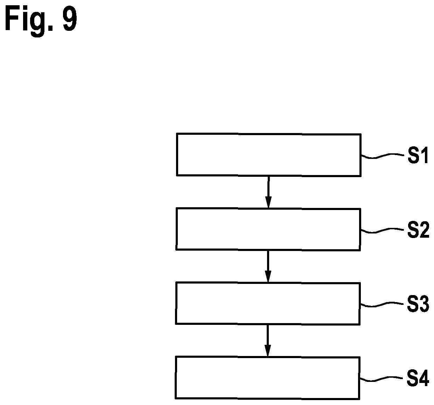

Fig. 9 zeigt ein Ablaufdiagramm eines Verfahrens zum Herstellen des modularen Kühlkanalgehäuses für einen Stator einer elektrischen Maschine gemäß der bevorzugten Ausführungsform der Erfindung.

Das Verfahren umfasst ein Bereitstellen S1 eines Metallzylinders 10. Das Verfahren umfasst des Weiteren ein Spritzgießen S2 eines ersten Verbindungsmoduls 12 und eines zweiten Verbindungsmoduls 14 in einem Spritzgießwerkzeug einer ersten Spritzgießmaschine.

Das Verfahren umfasst ferner ein Spritzgießen S3 eines Mittelmoduls 16 in einem Spritzgießwerkzeug einer zweiten Spritzgießmaschine, wobei die Module 12, 14, 16 mit einer Mehrzahl von an der Innenoberfläche 12, 14a, 16a der Wandung 12b, 14b, 16b der Module 12, 14, 16 angeordneten Stegelementen 18a, 18b ausgebildet werden.

Das Verfahren umfasst darüber hinaus ein Anordnen S4 der Module 12, 14, 16 auf einer Außenoberfläche 10a des Metallzylinders 10 und konzentrisch zu dem Metallzylinder 10, wobei das Mittelmodul 16 zwischen dem ersten Verbindungsmodul 12 und dem zweiten Verbindungsmodul 14 angeordnet wird, wobei das Mittelmodul 16 mit dem ersten Verbindungsmodul 12 und dem zweiten Verbindungsmodul 14 dichtend verbunden wird, wobei ein zwischen der Außenoberfläche 10a des Metallzylinders 10 und einer Innenoberfläche der Wandung 12b, 14b, 16b der Module 12, 14, 16 ausgebildetes Volumen mit einem Kühlmittel K befüllbar ist, wobei die Stegelemente 18a, 18b bei einer durch eine Temperaturänderung des Kühlmittels K bewirkten Volumenänderung des Kühlmittels K einen radialen Abstand A der Wandung 12b, 14b, 16b der Module 12, 14, 16 von der Außenoberfläche 10a des Metallzylinders 10 bei kontinuierlich dichtender Anlage der Stegelemente 18a, 18b an der Außenoberfläche 10a des Metallzylinders 10 an das geänderte Kühlmittelvolumen anpassen.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung, die in den Ansprüchen definiert ist, abzuweichen.

Beispielsweise kann eine Form, Abmessung oder eine Anzahl der Module des modularen Kühlkanalgehäuses entsprechend jeweiliger baulicher bzw. systemischer Anforderungen abgeändert werden.

## Patentansprüche

1. Modulares Kühlkanalgehäuse (1) für einen Stator (2) einer elektrischen Maschine, aufweisend:
einen Metallzylinder (10); ein erstes Verbindungsmodul (12); ein zweites Verbindungsmodul (14); und ein zwischen dem ersten Verbindungsmodul (12) und dem zweiten Verbindungsmodul (14) angeordnetes Mittelmodul (16), wobei das Mittelmodul (16) mit dem ersten Verbindungsmodul (12) und dem zweiten Verbindungsmodul (14) dichtend verbunden ist, wobei jedes der Module (12, 14, 16) auf einer Außenoberfläche (10a) des Metallzylinders (10) angeordnet und zu dem Metallzylinder (10) konzentrisch ausgebildet ist, wobei ein zwischen der Außenoberfläche (10a) des Metallzylinders (10) und einer Innenoberfläche (12a, 14a, 16a) einer Wandung (12b, 14b, 16b) der Module (12, 14, 16) ausgebildetes Volumen mit einem Kühlmittel (K) befüllbar ist, wobei die Module (12, 14, 16) eine Mehrzahl von an der Innenoberfläche (12a, 14a, 16a) der Wandung (12b, 14b, 16b) ausgebildeten Stegelementen (18a, 18b) aufweisen, wobei die Stegelemente (18a, 18b) jeweils einen ersten Spreizabschnitt (18a2, 18b2) und einen zweiten Spreizabschnitt (18a3,18b3) aufweisen, welche an der Außenoberfläche (10a) des Metallzylinders (10) dichtend anliegen, wobei die Stegelemente (18a, 18b) dazu ausgebildet sind, bei einer durch eine Temperaturänderung des Kühlmittels (K) bewirkten Volumenänderung des Kühlmittels (K) einen radialen Abstand (A) der Wandung (12b, 14b, 16b) der Module (12, 14, 16) von der Außenoberfläche (10a) des Metallzylinders (10) bei kontinuierlich dichtender Anlage der Stegelemente (18a, 18b) an der Außenoberfläche (10a) des Metallzylinders (10) durch eine Veränderung der Spreizung der Spreizabschnitte (18a2, 18a3, 18b2, 18b3) der jeweiligen Stegelemente (18a, 18b) an das geänderte Kühlmittelvolumen anzupassen.

2. Modulares Kühlkanalgehäuse nach Anspruch 1, **dadurch gekennzeichnet, dass** ein jeweiliges Stegelement (18a, 18b) einen an der Innenoberfläche (12a, 14a, 16a) der Wandung (12b, 14b, 16b) der Module (12, 14, 16) angeordneten Basisabschnitt (18a1, 18b1) und einen sich an den Basisabschnitt (18a1, 18b1) axial anschließenden ersten Spreizabschnitt (18a2, 18b2) und zweiten Spreizabschnitt (18a3, 18b3) aufweist, wobei der erste Spreizabschnitt (18a2, 18b2) und der zweite Spreizabschnitt (18a3, 18b3) an der Außenoberfläche (10a) des Metallzylinders (10) dichtend anliegen und in einem vorgegebenen Winkel (α) zum Basisabschnitt (18a1, 18b1) angestellt sind.

3. Modulares Kühlkanalgehäuse nach Anspruch 2, **dadurch gekennzeichnet, dass** der erste Spreizabschnitt (18a2, 18b2) und der zweite Spreizabschnitt (18a3, 18b3) zu dem Basisabschnitt (18a1, 18b1) derart spreizbar sind, dass bei der durch die Temperaturänderung des Kühlmittels (K) bewirkten Volumenänderung des Kühlmittels (K) der radiale Abstand (A) der Wandung (12b, 14b, 16b) der Module (12, 14, 16) von der Außenoberfläche (10a) des Metallzylinders (10) durch Änderung des Winkels (α) der Spreizabschnitte (18a2, 18a3, 18b2, 18b3) zum Basisabschnitt (18a1, 18b1) bei kontinuierlich dichtender Anlage der Stegelemente (18a, 18b) an der Außenoberfläche (10a) des Metallzylinders (10) änderbar ist.

4. Modulares Kühlkanalgehäuse nach Anspruch 1 oder 2, **dadurch gekennzeichnet, dass** die Module (12, 14, 16) aus zumindest einem Kunststoff der Gruppe bestehend aus Polyamid, Acrylnitril-Butadien-Styrol-Copolymer oder Polypropylen ausgebildet sind.

5. Modulares Kühlkanalgehäuse nach Anspruch 1, **dadurch gekennzeichnet, dass** das erste Verbindungsmodul (12) an einem zu dem Mittelmodul (16) benachbart angeordneten axialen Endabschnitt (12c) zumindest einen Gewindeeinsatz (20a) aufweist, wobei das Mittelmodul (16) an einem zu dem ersten Verbindungsmodul (12) benachbart angeordneten axialen Endabschnitt (16c) zumindest eine zu dem zumindest einen Gewindeeinsatz (20a) des ersten Verbindungsmoduls (12) deckungsgleiche Anschraubbuchse (22a) aufweist, durch welche eine Schraube (24a) zum Befestigen des Mittelmoduls (16) an dem ersten Verbindungsmodul (12) eingefügt ist.

6. Modulares Kühlkanalgehäuse nach Anspruch 1 oder 2, **dadurch gekennzeichnet, dass** das zweite Verbindungsmodul (14) an einem zu dem Mittelmodul (16) benachbart angeordneten axialen Endabschnitt (14c) zumindest einen Gewindeeinsatz (20b) aufweist, wobei das Mittelmodul (16) an einem zu dem zweiten Verbindungsmodul (14) benachbart angeordneten axialen Endabschnitt (14d) zumindest eine zu dem zumindest einen Gewindeeinsatz (20b) des zweiten Verbindungsmoduls (14) deckungsgleiche Anschraubbuchse (22b) aufweist, durch welche eine Schraube (24b) zum Befestigen des Mittelmoduls (16) an dem zweiten Verbindungsmodul (14) eingefügt ist.

7. Modulares Kühlkanalgehäuse nach einem der vorhergehenden Ansprüche, **dadurch gekennzeichnet, dass** das Mittelmodul (16) an einer Verbindungsfläche (16d) zu dem ersten Verbindungsmodul (12) ein mit einer Mehrzahl von Hinterschnitten ausgebildetes erstes Dichtelement (26) aufweist, welches von der Wandung (16b) des Mittelmoduls (16) derart umspritzt ist, dass dieses an der Wandung (16b) des Mittelmoduls (16) positionsfest angeordnet ist, und wobei das Mittelmodul (16) an einer Verbindungsfläche (16e) zu dem zweiten Verbindungsmodul (14) ein mit einer Mehrzahl von Hinterschnitten ausgebildetes zweites Dichtelement (28) aufweist, welches von der Wandung (16b) des Mittelmoduls (16) derart umspritzt ist, dass dieses an der Wandung (16b) des Mittelmoduls (16) positionsfest angeordnet ist.

8. Modulares Kühlkanalgehäuse nach einem der vorhergehenden Ansprüche, **dadurch gekennzeichnet, dass** die Wandung (16b) des Mittelmoduls (16) die Wandung (12b, 14b) des ersten Verbindungsmoduls (12) und des zweiten Verbindungsmoduls (14) in Axialrichtung (X) zumindest abschnittsweise überlappt, wobei die Wandung (16b) des Mittelmoduls (16) radial außerhalb der Wandungen (12b, 14b) des ersten Verbindungsmoduls (12) und des zweiten Verbindungsmoduls (14) angeordnet ist.

9. Modulares Kühlkanalgehäuse nach einem der vorhergehenden Ansprüche, **dadurch gekennzeichnet, dass** das erste Verbindungsmodul (12) an einem zu dem Mittelmodul (16) entgegengesetzt angeordneten weiteren axialen Endabschnitt (12d) ein mit einer Mehrzahl von Hinterschnitten ausgebildetes drittes Dichtelement (30) aufweist, welches von der Wandung (12b) des ersten Verbindungsmoduls (12) und einem an einer Innenoberfläche (10b) des Metallzylinders (10) angeordneten Zylinderaufsatz (32) derart umspritzt ist, dass dieses positionsfest angeordnet ist.

10. Modulares Kühlkanalgehäuse nach einem der vorhergehenden Ansprüche, **dadurch gekennzeichnet, dass** das zweite Verbindungsmodul (14) an einem zu dem Mittelmodul (16) entgegengesetzt angeordneten weiteren axialen Endabschnitt (14d) ein mit einer Mehrzahl von Hinterschnitten ausgebildetes viertes Dichtelement (34) aufweist, welches von der Wandung (14b) des zweiten Verbindungsmoduls (14) und einem an einer Innenoberfläche (10b) des Metallzylinders (10) angeordneten Zylinderaufsatz (36) derart umspritzt ist, dass dieses positionsfest angeordnet ist.

11. Verfahren zum Herstellen eines modularen Kühlkanalgehäuses (1) für einen Stator (2) einer elektrischen Maschine nach einem der Ansprüche 1 bis 10, mit den Schritten:
Bereitstellen (S1) eines Metallzylinders (10);
Spritzgießen (S2) eines ersten Verbindungsmoduls (12) und eines zweiten Verbindungsmoduls (14) in einem Spritzgießwerkzeug einer ersten Spritzgießmaschine;
Spritzgießen (S3) eines Mittelmoduls (16) in einem Spritzgießwerkzeug einer zweiten Spritzgießmaschine, wobei die Module (12, 14, 16) mit einer Mehrzahl von an einer Innenoberfläche (12a, 14a, 16a) einer Wandung (12b, 14b, 16b) der Module (12, 14, 16) angeordneten Stegelementen (18a, 18b) ausgebildet werden; und
Anordnen (S4) der Module (12, 14, 16) auf einer Außenoberfläche (10a) des Metallzylinders (10) und konzentrisch zu dem Metallzylinder (10), wobei das Mittelmodul (16) zwischen dem ersten Verbindungsmodul (12) und dem zweiten Verbindungsmodul (14) angeordnet wird, wobei das Mittelmodul (16) mit dem ersten Verbindungsmodul (12) und dem zweiten Verbindungsmodul (14) dichtend verbunden wird, wobei ein zwischen der Außenoberfläche (10a) des Metallzylinders (10) und einer Innenoberfläche der Wandung (12b, 14b, 16b) der Module (12, 14, 16) ausgebildetes Volumen mit einem Kühlmittel (K) befüllbar ist, wobei die Stegelemente (18a, 18b) jeweils einen ersten Spreizabschnitt (18a2, 18b2) und einen zweiten Spreizabschnitt (18a3,18b3) aufweisen, welche an der Außenoberfläche (10a) des Metallzylinders (10) dichtend anliegen, wobei die Stegelemente (18a, 18b) bei einer durch eine Temperaturänderung des Kühlmittels (K) bewirkten Volumenänderung des Kühlmittels (K) einen radialen Abstand (A) der Wandung (12b, 14b, 16b) der Module (12, 14, 16) von der Außenoberfläche (10a) des Metallzylinders (10) bei kontinuierlich dichtender Anlage der Stegelemente (18a, 18b) an der Außenoberfläche (10a) des Metallzylinders (10) durch eine Veränderung der Spreizung der Spreizabschnitte (18a2, 18a3, 18b2, 18b3) der jeweiligen Stegelemente (18a, 18b) an das geänderte Kühlmittelvolumen anpassen.

12. Verfahren nach Anspruch 11, **dadurch gekennzeichnet, dass** ein mit einer Mehrzahl von Hinterschnitten ausgebildetes erstes Dichtelement (26) und drittes Dichtelement (30) in eine geöffnete Kavität (38a1) des Spritzgießwerkzeugs (38a) der ersten Spritzgießmaschine (38) mit einem Handling auf Haltestifte (40) gesetzt und durch in dem Spritzgießwerkzeug (38a) ausgebildeten Vakuumöffnungen (42) fixiert werden,
wobei zumindest ein Gewindeeinsatz (20a) mit dem Handling auf weitere Haltestifte in der geöffneten Kavität (38a1) des Spritzgießwerkzeugs (38a) der ersten Spritzgießmaschine (38) gesetzt wird, und wobei das erste Verbindungsmodul (12) oder das zweite Verbindungsmodul (14) durch Umspritzen des erstes Dichtelements (26), des dritten Dichtelements (30) und des zumindest einen Gewindeeinsatzes (20a) ausgeformt wird.

13. Verfahren nach Anspruch 11, **dadurch gekennzeichnet, dass** ein mit einer Mehrzahl von Hinterschnitten ausgebildetes zweites Dichtelement (28) und viertes Dichtelement (34) in eine geöffnete Kavität (44a1) des Spritzgießwerkzeugs (44a) der zweiten Spritzgießmaschine (44) mit einem Handling auf Haltestifte gesetzt und durch in dem Spritzgießwerkzeug (44a) ausgebildeten Vakuumöffnungen (56) fixiert werden, wobei zumindest eine Anschraubbuchse (20b) mit dem Handling auf weitere Haltestifte in der geöffneten Kavität (44a1) des Spritzgießwerkzeugs (44a) der zweiten Spritzgießmaschine (44) gesetzt wird, und wobei das Mittelmodul (16) durch Umspritzen des zweiten Dichtelements (28), des vierten Dichtelements (34) und der zumindest einen Anschraubbuchse (22a, 22b) ausgeformt wird.

## Claims

1. Modular cooling duct housing (1) for a stator (2) of an electric machine, having:
a metal cylinder (10); a first connection module (12); a second connection module (14); and a central module (16) which is disposed between the first connection module (12) and the second connection module (14), wherein the central module (16) is connected in a sealing manner to the first connection module (12) and the second connection module (14), wherein each one of the modules (12, 14, 16) is disposed on an external surface (10a) of the metal cylinder (10) and configured so as to be concentric with the metal cylinder (10), wherein a volume that is configured between the external surface (10a) of the metal cylinder (10) and an internal surface (12a, 14a, 16a) of a wall (12b, 14b, 16b) of the modules (12, 14, 16) is able to be filled with a coolant (K), wherein the modules (12, 14, 16) have a plurality of web elements (18a, 18b) that are configured on the internal surface (12a, 14a, 16a) of the wall (12b, 14b, 16b), wherein the web elements (18a, 18b) have in each case one first expansion portion (18a2, 18b2) and one second expansion portion (18a3, 18b3) which in a sealing manner bear on the external surface (10a) of the metal cylinder (10), wherein the web elements (18a, 18b) in a volumetric variation of the coolant (K) caused by a temperature variation of the coolant (K) are configured for adapting a radial spacing (A) of the wall (12b, 14b, 16b) of the modules (12, 14, 16) from the external surface (10a) of the metal cylinder (10) to the varied coolant volume by varying the expansion of the expansion portions (18a2, 18a3, 18b2, 18b3) of the respective web elements (18a, 18b) while the web elements (18a, 18b) in a sealing manner continuously bear on the external surface (10a) of the metal cylinder (10).

2. Modular cooling duct housing according to Claim 1, **characterized in that** a respective web element (18a, 18b) has a base portion (18a1, 18b1), which is disposed on the internal surface (12a, 14a, 16a) of the wall (12b, 14b, 16b) of the modules (12, 14, 16), and a first expansion portion (18a2, 18b2), which axially adjoins the base portion (18a1, 18a2), and a second expansion portion (18a3, 18b3), wherein the first expansion portion (18a2, 18b2) and the second expansion portion (18a3, 18b3) in a sealing manner bear on the external surface (10a) of the metal cylinder (10) and are set at a predefined angle (α) in relation to the base portion (18a1, 18b1).

3. Modular cooling duct housing according to Claim 2, **characterized in that** the first expansion portion (18a2, 18b2) and the second expansion portion (18a3, 18b3) are able to be expanded in relation to the base portion (18a1, 18b1) in such a manner that the radial spacing (A) of the wall (12b, 14b, 16b) of the modules (12, 14, 16) from the external surface (10a) of the metal cylinder (10) in the volumetric variation of the coolant (K) caused by a temperature variation of the coolant (K) is variable by varying the angle (α) of the expansion portions (18a2, 18a3, 18b2, 18b3) in relation to the base portion (18a1, 18b1) while the web elements (18a, 18b) in a sealing manner continuously bear on the external surface (10a) of the metal cylinder (10).

4. Modular cooling duct housing according to Claim 1 or 2, **characterized in that** the modules (12, 14, 16) are configured from at least one plastics material from the group composed of polyamide, acrylonitrile-butadienestyrene copolymer, or polypropylene.

5. Modular cooling duct housing according to Claim 1, **characterized in that** the first connection module (12) on an axial end portion (12c) that is disposed so as to be adjacent to the central module (16) has at least one threaded insert (20a), wherein the central module (16) on an axial end portion (16c) that is disposed so as to be adjacent to the first connection module (12) has at least one screw-fit bushing (22a) which is congruent with the at least one threaded insert (20a) of the first connection module (12) and through which a screw (24a) for fastening the central module (16) to the first connection module (12) is inserted.

6. Modular cooling duct housing according to Claim 1 or 2, **characterized in that** the second connection module (14) on an axial end portion (14c) that is disposed so as to be adjacent to the central module (16) has at least one threaded insert (20b), wherein the central module (16) on an axial end portion (14d) that is disposed so as to be adjacent to the second connection module (14) has at least one screw-fit bushing (22b) which is congruent with the at least one threaded insert (20b) of the second connection module (14) and through which a screw (24b) for fastening the central module (16) to the second connection module (14) is inserted.

7. Modular cooling duct housing according to one of the preceding claims, **characterized in that** the central module (16) on a connection face (16d) to the first connection module (12) has a first sealing element (26) which is configured having a plurality of undercuts and which by the wall (16b) of the central module (16) is overmoulded in such a manner that said first sealing element (26) is disposed in a positionally fixed manner on the wall (16b) of the central module (16), and wherein the central module (16) on a connection face (16e) to the second connection module (14) has a second sealing element (28) which is configured having a plurality of undercuts and which by the wall (16b) of the central module (16) is overmoulded in such a manner that said second sealing element (28) is disposed in a positionally fixed manner on the wall (16b) of the central module (16) .

8. Modular cooling duct housing according to one of the preceding claims, **characterized in that** the wall (16b) of the central module (16) at least in portions in the axial direction (X) overlaps the wall (12b, 14b) of the first connection module (12) and of the second connection module (14), wherein the wall (16b) of the central module (16) is disposed radially outside the walls (12b, 14b) of the first connection module (12) and of the second connection module (14).

9. Modular cooling duct housing according to one of the preceding claims, **characterized in that** the first connection module (12) on a further axial end portion (12d) disposed opposite to the central module (16) has a third sealing element (30) which is configured having a plurality of undercuts and which by the wall (12b) of the first connection module (12) and by a cylinder attachment (32) disposed on an internal surface (10b) of the metal cylinder (10) is overmoulded in such a manner that said third sealing element (30) is disposed in a positionally fixed manner.

10. Modular cooling duct housing according to one of the preceding claims, **characterized in that** the second connection module (14) on a further axial end portion (14d) disposed opposite to the central module (16) has a fourth sealing element (34) which is configured having a plurality of undercuts and which by way of the wall (14b) of the second connection module (14) and by a cylinder attachment (36) disposed on an internal surface (10b) of the metal cylinder (10) is overmoulded in such a manner that said fourth sealing element (34) is disposed in a positionally fixed manner.

11. Method for producing a modular cooling duct housing (1) for a stator (2) of an electric machine according to one of Claims 1 to 10, said method comprising the following steps:
providing (S1) a metal cylinder (10);
injection-moulding (S2) a first connection module (12) and a second connection module (14) in an injection-moulding tool of a first injection-moulding machine;
injection-moulding (S3) a central module (16) in an injection-moulding tool of a second injection-moulding machine, wherein the modules (12, 14, 16) are configured having a plurality of web elements (18a, 18b) that are configured on an internal surface (12a, 14a, 16a) of a wall (12b, 14b, 16b) of the modules (12, 14, 16); and
disposing (S4) the modules (12, 14, 16) on an external surface (10a) of the metal cylinder (10) and so as to be concentric with the metal cylinder (10), wherein the central module (16) is disposed between the first connection module (12) and the second connection module (14), wherein the central module (16) in a sealing manner is connected to the first connection module (12) and the second connection module (14), wherein a volume that is configured between the external surface (10a) of the metal cylinder (10) and an internal surface of the wall (12b, 14b, 16b) of the modules (12, 14, 16) is able to be filled with a coolant (K), wherein the web elements (18a, 18b) have in each case one first expansion portion (18a2, 18b2) and one second expansion portion (18a3, 18b3) which in a sealing manner bear on the external surface (10a) of the metal cylinder (10), wherein the web elements (18a, 18b) in a volumetric variation of the coolant (K) caused by a temperature variation of the coolant (K) adapt a radial spacing (A) of the wall (12b, 14b, 16b) of the modules (12, 14, 16) from the external surface (10a) of the metal cylinder (10) to the varied coolant volume by varying the expansion of the expansion portions (18a2, 18a3, 18b2, 18b3) of the respective web elements (18a, 18b) while the web elements (18a, 18b) in a sealing manner continuously bear on the external surface (10a) of the metal cylinder (10).

12. Method according to Claim 11, **characterized in that** a first sealing element (26) and third sealing element (30) configured having a plurality of undercuts by handling are placed on holding pins (40) in an opened cavity (38a1) of the injection-moulding tool (38a) of the first injection-moulding machine (38) and fixed by vacuum openings (42) configured in the injection-moulding tool (38a), wherein at least one threaded insert (20a) by handling is placed on further holding pins in the opened cavity (38a1) of the injection-moulding tool (38a) of the first injection-moulding machine (38), and wherein the first connection module (12) or the second connection module (14) is moulded by overmoulding the first sealing element (26), the third sealing element (30) and the at least one threaded insert (20a).

13. Method according to Claim 11, **characterized in that** a second sealing element (28) and fourth sealing element (34) configured having a plurality of undercuts by handling are placed on holding pins in an opened cavity (44a1) of the injection-moulding tool (44a) of the second injection-moulding machine (44) and fixed by vacuum openings (56) configured in the injection-moulding tool (44a), wherein at least one screw-fit bushing (20b) by handling is placed on further holding pins in the opened cavity (44a1) of the injection-moulding tool (44a) of the second injection-moulding machine (44), and wherein the central module (16) is moulded by overmoulding the second sealing element (28), the fourth sealing element (34) and the at least one screw-fit bushing (22a, 22b).

## Revendications

1. Boîtier modulaire de canal de refroidissement (1) pour un stator (2) d'une machine électrique, comprenant :
un cylindre métallique (10) ; un premier module de liaison (12) ; un deuxième module de liaison (14) ; et
un module central (16) disposé entre le premier module de liaison (12) et le deuxième module de liaison (14), dans lequel le module central (16) est relié de manière étanche au premier module de liaison (12) et au deuxième module de liaison (14), dans lequel chacun des modules (12, 14, 16) est disposé sur une surface extérieure (10a) du cylindre métallique (10) et formé de manière concentrique au cylindre métallique (10), dans lequel un volume formé entre la surface extérieure (10a) du cylindre métallique (10) et une surface intérieure (12a, 14a, 16a) d'une paroi (12b, 14b, 16b) des modules (12, 14, 16) peut être rempli d'un fluide de refroidissement (K), dans lequel les modules (12, 14, 16) comprennent une pluralité d'éléments nervurés (18a, 18b) formés sur la surface intérieure (12a, 14a, 16a) de la paroi (12b, 14b, 16b), dans lequel les éléments nervurés (18a, 18b) comprennent respectivement une première partie d'écartement (18a2, 18b2) et une deuxième partie d'écartement (18a3, 18b3), lesquelles s'appuient de manière étanche contre la surface extérieure (10a) du cylindre métallique (10), dans lequel les éléments nervurés (18a, 18b) sont formés pour, lors d'une variation de volume du fluide de refroidissement (K) provoquée par une variation de température du fluide de refroidissement (K), adapter une distance radiale (A) de la paroi (12b, 14b, 16b) des modules (12, 14, 16) par rapport à la surface extérieure (10a) du cylindre métallique (10) au volume de fluide de refroidissement modifié en cas d'appui étanche de manière continue des éléments nervurés (18a, 18b) contre la surface extérieure (10a) du cylindre métallique (10) par une variation de l'écartement des parties d'écartement (18a2, 18a3, 18b2, 18b3) des éléments nervurés (18a, 18b) respectifs.

2. Boîtier modulaire de canal de refroidissement selon la revendication 1, **caractérisé en ce qu'**un élément nervuré (18a, 18b) respectif comprend une partie de base (18a1, 18b1) disposée sur la surface intérieure (12a, 14a, 16a) de la paroi (12b, 14b, 16b) des modules (12, 14, 16) et une première partie d'écartement (18a2, 18b2) et une deuxième partie d'écartement (18a3, 18b3) qui se raccordent axialement à la partie de base (18a1, 18b1), la première partie d'écartement (18a2, 18b2) et la deuxième partie d'écartement (18a3, 18b3) s'appuyant de manière étanche contre la surface extérieure (10a) du cylindre métallique (10) et étant placées suivant un angle prédéfini (α) par rapport à la partie de base (18a1, 18b1).

3. Boîtier modulaire de canal de refroidissement selon la revendication 2, **caractérisé en ce que** la première partie d'écartement (18a2, 18b2) et la deuxième partie d'écartement (18a3, 18b3) peuvent être écartées par rapport à la partie de base (18a1, 18b1) de telle sorte que lors de la variation de volume du fluide de refroidissement (K) provoquée par la variation de température du fluide de refroidissement (K), la distance radiale (A) de la paroi (12b, 14b, 16b) des modules (12, 14, 16) par rapport à la surface extérieure (10a) du cylindre métallique (10) peut être modifiée par modification de l'angle (a) des parties d'écartement (18a2, 18a3, 18b2, 18b3) par rapport à la partie de base (18a1, 18b1) en cas d'appui étanche de manière continue des éléments nervurés (18a, 18b) contre la surface extérieure (10a) du cylindre métallique (10).

4. Boîtier modulaire de canal de refroidissement selon la revendication 1 ou 2, **caractérisé en ce que** les modules (12, 14, 16) sont formés à partir d'au moins une matière synthétique du groupe constitué de polyamide, de copolymère d'acrylonitrile-styrène-butadiène ou de polypropylène.

5. Boîtier modulaire de canal de refroidissement selon la revendication 1, **caractérisé en ce que** le premier module de liaison (12) comprend au moins un insert fileté (20a) au niveau d'une partie d'extrémité axiale (12c) disposée de manière adjacente au module central (16), le module central (16) comprenant, au niveau d'une partie d'extrémité axiale (16c), disposée de manière adjacente au premier module de liaison (12), au moins une douille filetée (22a) coïncidant avec l'au moins un insert fileté (20a) du premier module de liaison (12), à travers laquelle une vis (24a) servant à la fixation du module central (16) au premier module liaison (12) est insérée.

6. Boîtier modulaire de canal de refroidissement selon la revendication 1 ou 2, **caractérisé en ce que** le deuxième module de liaison (14) comprend au moins un insert fileté (20b) au niveau d'une partie d'extrémité axiale (14c) disposée de manière adjacente au module central (16), le module central (16) comprenant, au niveau d'une partie d'extrémité axiale (14d), disposée de manière adjacente au deuxième module de liaison (14), au moins une douille filetée (22b) coïncidant avec l'au moins un insert fileté (20b) du deuxième module de liaison (14), à travers laquelle une vis (24b) servant à la fixation du module central (16) au deuxième module liaison (14) est insérée.

7. Boîtier modulaire de canal de refroidissement selon l'une des revendications précédentes, **caractérisé en ce que** le module central (16) comprend, au niveau d'une surface de liaison (16d) par rapport au premier module de liaison (12), un premier élément d'étanchéité (26) pourvu d'une pluralité de contre-dépouilles, lequel est enrobé par injection par la paroi (16b) du module central (16) de telle sorte que celui-ci soit disposé de manière fixe en position sur la paroi (16b) du module central (16), et le module central (16) comprenant, au niveau d'une surface de liaison (16e) par rapport au deuxième module de liaison (14), un deuxième élément d'étanchéité (28) pourvu d'une pluralité de contre-dépouilles, lequel est enrobé par injection par la paroi (16b) du module central (16) de telle sorte que celui-ci soit disposé de manière fixe en position sur la paroi (16b) du module central (16).

8. Boîtier modulaire de canal de refroidissement selon l'une des revendications précédentes, **caractérisé en ce que** la paroi (16b) du module central (16) chevauche au moins dans certaines parties la paroi (12b, 14b) du premier module de liaison (12) et du deuxième module de liaison (14) dans la direction axiale (X), la paroi (16b) du module central (16) étant disposée radialement à l'extérieur des parois (12b, 14b) du premier module de liaison (12) et du deuxième module de liaison (14).

9. Boîtier modulaire de canal de refroidissement selon l'une des revendications précédentes, **caractérisé en ce que** le premier module de liaison (12) comprend, au niveau d'une autre partie d'extrémité axiale (12d) disposée de manière opposée au module central (16), un troisième élément d'étanchéité (30) pourvu d'une pluralité de contre-dépouilles, lequel est enrobé par injection par la paroi (12b) du premier module de liaison (12) et un élément rapporté cylindrique (32) disposé sur une surface intérieure (10b) du cylindre métallique (10) de telle sorte que ce troisième élément d'étanchéité soit disposé de manière fixe en position.

10. Boîtier modulaire de canal de refroidissement selon l'une des revendications précédentes, **caractérisé en ce que** le deuxième module de liaison (14) comprend, au niveau d'une autre partie d'extrémité axiale (14d) disposée de manière opposée au module central (16), un quatrième élément d'étanchéité (34) pourvu d'une pluralité de contre-dépouilles, lequel est enrobé par injection par la paroi (14b) du deuxième module de liaison (14) et un élément rapporté cylindrique (36) disposé sur une surface intérieure (10b) du cylindre métallique (10) de telle sorte que ce quatrième élément d'étanchéité soit disposé de manière fixe en position.

11. Procédé de fabrication d'un boîtier modulaire de canal de refroidissement (1) pour un stator (2) d'une machine électrique selon l'une des revendications 1 à 10, comportant les étapes suivantes :
fourniture (S1) d'un cylindre métallique (10) ;
moulage par injection (S2) d'un premier module de liaison (12) et d'un deuxième module de liaison (14) dans un outil de moulage par injection d'une première machine de moulage par injection ;
moulage par injection (S3) d'un module central (16) dans un outil de moulage par injection d'une deuxième machine de moulage par injection, dans lequel les modules (12, 14, 16) sont pourvus d'une pluralité d'éléments nervurés (18a, 18b) disposés sur une surface intérieure (12a, 14a, 16a) d'une paroi (12b, 14b, 16b) des modules (12, 14, 16) ; et
disposition (S4) des modules (12, 14, 16) sur une surface extérieure (10a) du cylindre métallique (10) et de manière concentrique au cylindre métallique (10), dans lequel le module central (16) est disposé entre le premier module de liaison (12) et le deuxième module de liaison (14), dans lequel le module central (16) est relié de manière étanche au premier module de liaison (12) et au deuxième module de liaison (14), dans lequel un volume formé entre la surface extérieure (10a) du cylindre métallique (10) et une surface intérieure de la paroi (12b, 14b, 16b) des modules (12, 14, 16) peut être rempli d'un fluide de refroidissement (K), dans lequel les éléments nervurés (18a, 18b) comprennent respectivement une première partie d'écartement (18a2, 18b2) et une deuxième partie d'écartement (18a3, 18b3), lesquelles s'appuient de manière étanche contre la surface extérieure (10a) du cylindre métallique (10), dans lequel les éléments nervurés (18a, 18b) sont formés pour, lors d'une variation de volume du fluide de refroidissement (K) provoquée par une variation de température du fluide de refroidissement (K), adapter une distance radiale (A) de la paroi (12b, 14b, 16b) des modules (12, 14, 16) par rapport à la surface extérieure (10a) du cylindre métallique (10) au volume de fluide de refroidissement modifié en cas d'appui étanche de manière continue des éléments nervurés (18a, 18b) contre la surface extérieure (10a) du cylindre métallique (10) par une variation de l'écartement des parties d'écartement (18a2, 18a3, 18b2, 18b3) des éléments nervurés (18a, 18b) respectifs.

12. Procédé selon la revendication 11, **caractérisé en ce qu'**un premier élément d'étanchéité (26) et un troisième élément d'étanchéité (30) pourvus d'une pluralité de contre-dépouilles sont placés sur des goupilles de retenue (40) dans une cavité ouverte (38a1) de l'outil de moulage par injection (38a) de la première machine de moulage par injection (38) à l'aide d'un moyen de manipulation et sont fixés à l'aide d'ouvertures à vide (42) formées dans l'outil de moulage par injection (38a),
au moins un insert fileté (20a) étant placé à l'aide du moyen de manipulation sur d'autres goupilles de retenue dans la cavité ouverte (38a1) de l'outil de moulage par injection (38a) de la première machine de moulage par injection (38), et le premier module de liaison (12) ou le deuxième module de liaison (14) étant façonné par enrobage par injection du premier élément d'étanchéité (26), du troisième élément d'étanchéité (30) et de l'au moins un insert fileté (20a).

13. Procédé selon la revendication 11, **caractérisé en ce qu'**un deuxième élément d'étanchéité (28) et un quatrième élément d'étanchéité (34) pourvus d'une pluralité de contre-dépouilles sont placés sur des goupilles de retenue dans une cavité ouverte (44a1) de l'outil de moulage par injection (44a) de la deuxième machine de moulage par injection (44) à l'aide d'un moyen de manipulation et sont fixés à l'aide d'ouvertures à vide (56) formées dans l'outil de moulage par injection (44a), au moins une douille filetée (20b) étant placée à l'aide du moyen de manipulation sur d'autres goupilles de retenue dans la cavité ouverte (44a1) de l'outil de moulage par injection (44a) de la deuxième machine de moulage par injection (44), et le module central (16) étant façonné par enrobage par injection du deuxième élément d'étanchéité (28), du quatrième élément d'étanchéité (34) et de l'au moins une douille filetée (22a, 22b).
